# FASCICULE DE BREVET EUROPEEN

(11) **EP 2 627 496 B1**
(45) Date de publication et mention de la délivrance du brevet: **03.12.2014**
(21) Numéro de dépôt: 11764747.9
(22) Date de dépôt: 06.10.2011
(51) Int. Cl.: B29C 49/78, B29C 49/64, B29C 35/08, B29C 49/68

(54) **PROCÉDÉ DE MISE EN VEILLE D'UN FOUR DE CONDITIONNEMENT THERMIQUE DE PRÉFORMES**
VERFAHREN ZUM STELLEN EINES OFENS ZUR WÄRMEBEHANDLUNG VON VORFORMEN AUF STANDBY
METHOD FOR PLACING AN OVEN FOR HEAT-TREATING PREFORMS ON STANDBY

(30) Priorité: 11.10.2010 FR 1058214
(43) Date de publication de la demande: 21.08.2013
(73) Titulaire: Sidel Participations, 76930 Octeville sur Mer (FR)
(72) Inventeur: DERRIEN, Mikael, F-76930 Octeville sur Mer (FR); BERNIER, Pascal, F-76930 Octeville sur Mer (FR); DANEL, Laurent, F-76930 Octeville sur Mer (FR)
(74) Mandataire: Gevers France
(86) Numéro de dépôt international: PCT/EP2011/067429
(87) Numéro de publication internationale: WO 2012/049061

(56) Documents cités:
- EP-A2- 1 837 157
- WO-A1-97/03805
- DE-A1-102008 021 527
- FR-A1- 2 890 891

## Description

L'invention concerne une procédé de mise en veille d'un four de conditionnement thermique de préformes en matériau thermoplastique.

L'invention concerne plus particulièrement un procédé de mise en veille d'un four de conditionnement thermique de préformes en matériau thermoplastique lors d'un arrêt temporaire de production, le four comportant : - un dispositif de transport de préformes assurant le défilement des préformes à travers le four ; - au moins une lampe de chauffage qui est susceptible d'émettre un rayonnement infrarouge lorsqu'elle est activée, chaque lampe de chauffage étant agencée le long du parcours des préformes ; - au moins un élément d'accumulation de chaleur qui est réalisé en un matériau présentant une grande capacité thermique, l'élément d'accumulation étant susceptible d'être chauffé par la lampe de chauffage ; - une unité électronique de commande des lampes de chauffage.

La fabrication de récipients en matière thermoplastique, tels que des bouteilles, flacons, etc. est généralement effectuée à partir de préformes, parfois appelées ébauches, qui sont introduites dans un dispositif de moulage auquel sont associés des moyens de soufflage ou d'étirage-soufflage.

Préalablement à leur moulage par soufflage ou étirage-soufflage, les préformes sont chauffées dans un four de conditionnement thermique de manière à leur conférer une structure suffisamment malléable pour l'opération de soufflage.

Les installations de fabrication en grande série de tels récipients sont équipées de fours de conditionnement comportant un tunnel de chauffage muni des moyens de chauffage des préformes. Les préformes sont généralement transportées à travers le tunnel de chauffage à grande vitesse sans marquer d'arrêt. Le tunnel présente une longueur suffisante pour permettre le chauffage des préformes durant leur traversée.

Les moyens de chauffage des préformes sont généralement formés par des lampes de chauffage qui émettent un rayonnement infrarouge. Ces lampes se présentent traditionnellement sous la forme de tubes horizontaux qui sont agencés sur une paroi du tunnel de chauffage. Chaque section de four est équipée de plusieurs lampes qui sont superposées afin de réaliser un chauffage adapté de l'ensemble du corps de la préforme.

La paroi en vis-à-vis des lampes de chauffage est équipée de moyens de ventilation qui permettent de brasser l'air afin d'éviter que certaines zones des préformes ne soient surchauffées par le rayonnement infrarouge.

Pour que la totalité du rayonnement infrarouge soit utilisé pour le chauffage de la préforme, des réflecteurs sont agencés derrière les lampes afin de réfléchir les rayons infrarouge en direction des préformes.

Certains incidents d'exploitation obligent à interrompre temporairement la production de l'installation. Dans ce cas, le four n'est plus alimenté en préformes. Les préformes présentes dans le four au moment de l'interruption d'alimentation finissent normalement leur parcours puis elles sont sorties du four en direction du dispositif de soufflage. Lorsque la dernière préforme est évacuée, le four ne contient plus aucune préforme.

Certaines pièces vulnérables du four sont susceptibles d'être détériorées par une température élevée. Ces pièces vulnérables risquent d'être endommagées si les lampes de chauffage restent activées en l'absence du passage des préformes.

En outre, il est aussi préférable que l'intérieur du four soit maintenu à une température suffisante pour que la production puisse être reprise rapidement en évitant une longue étape de remise en température du four.

Le four ainsi vidé est alors mis en veille. Il est alors connu de mettre en oeuvre un procédé de mise en veille du four au cours duquel l'intensité des lampes de chauffage est baissée afin d'éviter que les pièces vulnérables du four ne soient surchauffées et ainsi endommagées. Les moyens de ventilation sont en outre activés afin d'évacuer l'air chauffé par les lampes et refroidir plus efficacement les pièces vulnérables du four.

Cependant un tel procédé consomme beaucoup d'énergie. L'invention propose donc un procédé de mise en veille permettant de réduire la consommation d'énergie tout en assurant un fonctionnement optimal du four de conditionnement.

Le document WO-A1-97/03805 propose un procédé de mise en veille évitant de vider le four de ses préformes en éteignant les lampes de chauffage lors de sa mise en veille. Cependant, ce dispositif ne permet pas de redémarrer rapidement le four à lors de la reprise de la production.

L'invention porte ainsi sur un procédé du type décrit précédemment, comportant successivement : - une première étape d'extinction qui est déclenchée lors d'un arrêt de production, et au cours de laquelle les lampes de chauffages sont totalement éteintes ; - puis une deuxième étape de maintien en température qui est déclenchée à l'issue de la première étape et au cours de laquelle les lampes de chauffage sont activées à une intensité déterminée afin de réchauffer les éléments d'accumulation.

Selon d'autres caractéristiques du procédé : - le procédé est réitéré depuis la première étape jusqu'à ce que le four soit remis en production ; - la première étape prend fin à l'issue d'une première durée d'extinction prédéterminée ;
- la deuxième étape prend fin à l'issue d'une deuxième durée d'allumage prédéterminée ;
- la première étape prend fin lorsque la température de l'élément d'accumulation est inférieure ou égale à une première température inférieure de seuil ;
- la deuxième étape dure jusqu'à ce que la température de l'élément d'accumulation soit supérieure ou égale à une deuxième température supérieure de seuil ;
- la température de l'élément d'accumulation est mesurée par une sonde qui est agencée à proximité ou dans l'élément d'accumulation ;
- le four comporte des moyens de ventilation qui sont susceptibles d'être commandés par l'unité électronique de commande, les moyens de ventilation étant arrêtés lors de la première étape et étant activés lors de la deuxième étape ;
- lorsqu'un arrêt de production excède une durée limite, le procédé est arrêté et les lampes de chauffages sont totalement éteintes.

D'autres caractéristiques et avantages du procédé apparaîtront au cours de la lecture de la description détaillée qui va suivre pour la compréhension de laquelle on se reportera aux dessins annexés parmi lesquels :
- la figure 1 est une vue de dessus qui représente schématiquement un four de conditionnement thermique qui est destiné à équipé une installation de fabrication en grande série de récipients en matériau thermoplastique ;
- la figure 2 est une vue en section selon la plan de coupe 2-2 de la figure 1 qui représente une préforme défilant dans le tunnel du four de conditionnement, le tunnel étant équipé de lampes de chauffage et de réflecteurs ;
- la figure 3 est un diagramme-bloc qui représente le procédé de mise en veille du four réalisé selon les enseignements de l'invention.

Dans la suite de la description, on adoptera à titre non limitatif des orientations longitudinale "L" orientée d'arrière en avant, verticale "V" orientée de haut en bas, et transversale "T" orientée de gauche à droite. Ces orientations sont indiquées par le trièdre "L,V,T" des figures.

Dans la suite de la description, des éléments présentant des fonctions analogues, identiques ou similaires seront indiqués par des mêmes numéros de référence.

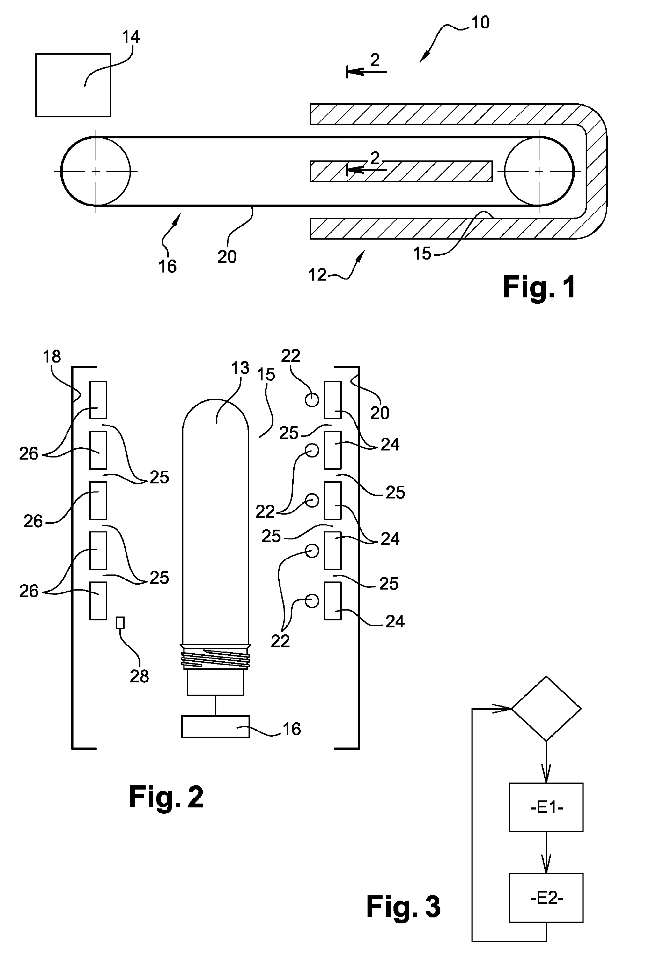

On a représenté à la figure 1 une installation 10 de fabrication en grandes séries de récipients en matériau thermoplastique. L'installation 10 comporte principalement un four 12 de conditionnement thermique de préformes 13 et une station 14 de moulage par soufflage des préformes 13 ainsi conditionnées, c'est-à-dire chauffées, pour former les récipients en matériau thermoplastique.

De manière connue, le four 12 de conditionnement thermique se présente sous la forme d'un tunnel 14 qui est traversé par les préformes 13. Les préformes 13 sont chauffées lors de leur traversée.

L'installation 10 comporte un dispositif 16 de transport de préformes 13 à travers le four 12 de conditionnement thermique qui est apte à faire défiler les préformes 13 les unes derrières les autres à l'intérieur du four 12. Le dispositif 16 de transport de préformes 13 assure ainsi le défilement des préformes 13 à travers le four 12.

Le four 12 comporte plusieurs sections. Au moins l'une des sections est munie de moyens de chauffage. Une de ces sections équipées de moyens de chauffage a été représentée plus en détail à la figure 2.

Comme représenté à la figure 2, le tunnel 14 est délimité transversalement par une première paroi 18 verticale intérieure et par une deuxième paroi 20 verticale extérieure. Chaque préforme 13 défile de manière que son axe soit vertical.

Dans l'exemple représenté à la figure 2, la préforme 13 défile dans le four 12 avec son col dirigé vers le bas. Cette configuration permet de chauffer efficacement le corps de la préforme 13 tout en gardant le col de la préforme relativement froid. Pour permettre un chauffage homogène du corps de la préforme 13, cette dernière est montée rotative autour de son axe vertical sur le dispositif 16 de transport.

La deuxième paroi 20 est équipée de moyens de chauffage du corps des préformes 13. Les moyens de chauffage sont formés par au moins une lampe 22 de chauffage qui est susceptible d'émettre un rayonnement infrarouge lorsqu'elle est activée.

Les moyens de chauffage comportent ici une pluralité de lampes 22 de chauffage qui se présentent sous la forme de tube longitudinaux qui sont portés par la deuxième paroi 20. Chaque lampe 22 de chauffage est ainsi agencée le long du parcours des préformes 13. Les lampes 22 de chauffage ainsi agencées émettent un rayonnement infrarouge dans toutes les directions, et notamment en direction du corps de la préforme 13 à chauffer.

Les lampes 22 de chauffage sont agencées verticalement les unes au-dessus des autres de manière à chauffer de manière globalement homogène tout le corps de la préforme 13.

Pour permettre d'améliorer l'efficacité des lampes 22 de chauffage, il est connu d'interposer des réflecteurs 24 entre la deuxième paroi 20 et chaque lampe 22 de chauffage. Les réflecteurs 24 sont conformés de manière que le rayonnement infrarouge qui est émis par les lampes 22 de chauffage en direction de la deuxième paroi 20 soit réfléchi en direction du corps de la préforme 13.

Les réflecteurs 24 sont ici formés venus de matière en une seule pièce formée d'une plaque verticale ajourée avec des évents 25 horizontaux. Les évents 25 permettent le passage d'un flux d'air comme cela sera expliqué par la suite.

De manière non limitative, pour améliorer encore le rendement des lampes 22 de chauffage, des réflecteurs 26 sont aussi agencés sur la première paroi 18 de manière que les rayons infrarouge qui traversent transversalement le tunnel 14 soient réfléchis en direction de la préforme 13. Les réflecteurs 26 de la première paroi 18 sont réalisés en une seule plaque ajourée d'évents 25. Cette plaque est identique à la plaque comportant les réflecteurs 24 de la deuxième paroi 20.

Le four 12 comporte aussi au moins un élément d'accumulation de chaleur qui est réalisé en un matériau présentant une grande capacité thermique, l'élément d'accumulation étant susceptible d'être chauffé par les lampes 22 de chauffage.

Dans l'exemple représenté à la figure 2, les éléments d'accumulation de chaleur sont ici formés par les réflecteurs 24, 26. Ceci permet avantageusement de réaliser deux fonctions avec un même élément afin de ne pas encombrer le four 12.

Selon une variante non représentée de l'invention, au moins certains éléments d'accumulation d'énergie calorifique ne remplissent pas une fonction de réflecteur. Il peut alors s'agir de blocs qui sont interposés verticalement entre deux lampes de chauffage.

Les réflecteurs 24, 26 sont réalisés en un matériau présentant une grande capacité thermique et une faible conductivité thermique. Il s'agit ici de réflecteurs 24, 26 qui sont réalisés en un matériau céramique. Ainsi, les réflecteurs 24, 26 sont susceptibles d'emmagasiner une grande quantité d'énergie calorifique.

A titre d'exemple non limitatif, la céramique employée pour fabriquer les réflecteurs 24, 26 présente une conductivité thermique inférieure à 30 W.m⁻¹.K⁻¹.

Les réflecteurs 24, 26 forment ainsi les éléments d'accumulation d'énergie calorifique. Comme cela sera exposé plus en détail par la suite, l'invention propose d'exploiter cette énergie calorifique emmagasinée.

Le four 12 comporte en outre des moyens de ventilation (non représentés) qui permettent de faire circuler de l'air dans le tunnel afin d'éviter que la préforme 13 ne soit chauffée de manière non homogène par le rayonnement infrarouge émis par les lampes 22 de chauffage.

Les moyens de ventilation comportent par exemple un ventilateur qui souffle de l'air transversalement à travers les évents 25 qui sont réalisés dans les plaques comportant les réflecteurs 24, 26.

Les lampes 22 de chauffage et les moyens de ventilation sont commandés par une unité électronique de commande (non représentée). Cette unité électronique de commande permet notamment de commander l'activation ou l'extinction totale des lampes 22 de chauffage. L'unité électronique de commande permet aussi de commander l'intensité d'activation des lampes 22 de chauffage.

Il arrive que des incidents d'exploitation obligent à interrompre la production des récipients. L'alimentation du four en préformes 13 est alors stoppée et les préformes 13 déjà présentent dans le four finissent leur cycle de chauffage avant d'être évacuée du four. Lorsque ces incidents d'exploitation peuvent être résolus en peu de temps, par exemple en moins de 30 minutes, il est avantageux de ne pas faire refroidir le four 12 afin de pouvoir redémarrer rapidement la production, sans qu'il soit nécessaire de préchauffer le four 12.

L'invention propose un procédé de mise en veille du four 12 de conditionnement thermique lors d'un arrêt temporaire de production. Un tel procédé est notamment représenté à la figure 3.

Lorsqu'un arrêt de production est signalé à l'unité électronique de commande, le procédé de mise en veille est déclenché. Ce procédé de mise en veille comporte notamment :
- une première étape "E1" d'extinction qui est déclenchée lorsqu'un arrêt de production est constaté, et au cours de laquelle les lampes de chauffages sont totalement éteintes par l'unité électronique de commande une fois le four vidé de ses préformes;
- puis une deuxième étape "E2" de maintien en température qui est déclenchée à l'issue de la première étape "E1" et au cours de laquelle les lampes de chauffage sont activées à une intensité déterminée par l'unité électronique de commande.

Lors de la première étape "E1 ", la présence des éléments d'accumulation formés par les réflecteurs 24, 26 à grande capacité thermique permet en effet d'éteindre totalement les lampes 22 de chauffage sans que la température interne du four 12 ne s'abaisse brutalement. L'énergie calorifique emmagasinée par les réflecteurs 24, 26 est en effet restituée, notamment par convection, à l'air ambiant contenu à l'intérieur du four 12. Ainsi l'intérieur du four est maintenu chaud pour permettre un redémarrage de production plus rapide.

Lors de la première étape "E1", l'unité électronique de commande désactive aussi les moyens de ventilation de façon à ne pas refroidir trop vite les éléments d'accumulation formés par les réflecteurs 24, 26. Ainsi seule la convection naturelle provoque un refroidissement des réflecteurs 24, 26.

A titre d'exemple non limitatif, lorsque les moyens de ventilation sont activés, on constate un refroidissement de 100°C par minute tandis que lorsque les moyens de ventilation sont éteints, le refroidissement n'est que de 10°C par minute. Pendant la production, les réflecteurs 24, 26 atteignent une température qui est par exemple comprise entre 300 et 500°C. Ainsi, lorsque les moyens de ventilation sont désactivés, les réflecteurs 24, 26 demeurent chauds longtemps par rapport à un arrêt de production de l'ordre de 10 à 20 minutes.

La deuxième étape "E2" a pour but d'éviter que la température interne du four 12 ne chute trop à la suite d'une interruption prolongée de la production. Une chute de température trop importante entraînerait en effet l'obligation de préchauffer le four 12 lors du redémarrage de la production. L'activation des lampes 22 de chauffage par l'unité électronique de commande permet alors de réchauffer les réflecteurs 24, 26 pour leur permettre d'emmagasiner à nouveau de l'énergie calorifique. Les lampes 22 de chauffage peuvent être activées à une intensité modérée, par exemple à 50% de leur intensité maximale.

Lors de cette deuxième étape "E2", les moyens de ventilation sont activés par l'unité électronique de commande. En effet, les lampes 22 de chauffage chauffent alors l'intérieur du tunnel de chauffage et risquerait de détériorer certaines pièces vulnérables, telles que des pièces métalliques ou encore les moyens de transport 16 des préformes 13.

Selon un premier mode de réalisation de l'invention, la première étape "E1" et la deuxième étape "E2" sont programmées pour durer un temps prédéterminé, par exemple 5 minutes chacune. Ainsi, la première étape "E1" prend fin à l'issue d'une première durée "D1" d'extinction prédéterminée, et la deuxième étape "E2" prend fin à l'issue d'une deuxième durée "D2" d'allumage prédéterminée.

La durée "D1", "D2" de chacune de ces deux étapes "E1" et "E2" est par exemple définie expérimentalement.

Lorsque l'interruption de production se prolonge au-delà de la durée "D2" prévue pour la deuxième étape "E2", le procédé est réitéré à l'issue de la deuxième étape "E2". Le procédé est ainsi réitéré jusqu'à ce que l'installation 10 soit remise en production.

Selon un deuxième mode de réalisation de l'invention, le four 12 est équipé d'au moins une sonde de température 28 qui est apte à mesurer la température à proximité ou à l'intérieur d'un réflecteur 24, 26. La température ainsi mesurée est transmise à l'unité électronique de commande.

La deuxième étape "E2" est déclenchée lorsque la température mesurée est inférieure à une première température "T1" inférieure de seuil.

Puis, lorsque l'interruption de production se prolonge, le procédé est réitéré lorsque la température mesurée est devenue supérieure ou égale à une deuxième température "T2" supérieure de seuil. La deuxième température "T2" est supérieure à la première température "T1".

On peut aussi prévoir que, lorsque la durée d'interruption de production excède une durée prédéterminée, par exemple 30 minutes, le procédé de mise en veille prend fin et les lampes 22 de chauffage ainsi que les moyens de ventilation sont tous éteints jusqu'à la reprise de la production. Le four 12 devra alors être préchauffé avant que la production ne puisse reprendre.

## Revendications

1. Procédé de mise en veille d'un four (12) de conditionnement thermique de préformes (13) en matériau thermoplastique lors d'un arrêt temporaire de production, le four (12) comportant :
- un dispositif (16) de transport de préformes (13) assurant le défilement des préformes (13) à travers le four (12) ;
- au moins une lampe (22) de chauffage qui est susceptible d'émettre un rayonnement infrarouge lorsqu'elle est activée, chaque lampe (22) de chauffage étant agencée le long du parcours des préformes (13) ;
- une unité électronique de commande des lampes (22) de chauffage ;
le procédé comportant une première étape (E1) d'extinction qui est déclenchée lorsqu'un arrêt de production est constaté, et au cours de laquelle les lampes (22) de chauffages sont totalement éteintes ;
**caractérisé en ce que** le four (12) comporte au moins un élément (24, 26) d'accumulation de chaleur qui est réalisé en un matériau présentant une grande capacité thermique, l'élément d'accumulation (24, 26) étant susceptible d'être chauffé par la lampe (22) de chauffage ;
et **en ce que** le procédé comporte une deuxième étape (E2) suivante de maintien en température afin d'éviter de préchauffer le four (12) lors du redémarrage de la production et qui est déclenchée à l'issue de la première étape (E1) et au cours de laquelle les lampes (22) de chauffage sont activées à une intensité déterminée afin de réchauffer les éléments d'accumulation (24, 26).

2. Procédé selon la revendication précédente, **caractérisé en ce que** le procédé est réitéré depuis la première étape (E1) jusqu'à ce que le four (12) soit remis en production.

3. Procédé selon l'une quelconque des revendications précédentes, **caractérisé en ce que** la première étape (E1) prend fin à l'issue d'une première durée (D1) d'extinction prédéterminée.

4. Procédé selon la revendication précédente, **caractérisé en ce que** la deuxième étape (E2) prend fin à l'issue d'une deuxième durée (D2) d'allumage prédéterminée.

5. Procédé selon l'une quelconque des revendications 1 ou 2, **caractérisé en ce que** la première étape (E1) prend fin lorsque la température de l'élément d'accumulation (24, 26) est inférieure ou égale à une première température (T1) inférieure de seuil.

6. Procédé selon la revendication précédente, **caractérisé en ce que** la deuxième étape dure jusqu'à ce que la température de l'élément d'accumulation (24, 26) soit supérieure ou égale à une deuxième température (T2) supérieure de seuil.

7. Procédé selon l'une quelconque des revendications 5 ou 6, **caractérisé en ce que** la température de l'élément d'accumulation (24, 26) est mesurée par une sonde (28) qui est agencée à proximité ou dans l'élément d'accumulation (24, 26).

8. Procédé selon l'une quelconque des revendications précédentes, **caractérisé en ce que** le four (12) comporte des moyens de ventilation qui sont susceptibles d'être commandés par l'unité électronique de commande, les moyens de ventilation étant arrêtés lors de la première étape (E1) et étant activés lors de la deuxième étape (E2).

9. Procédé selon l'une quelconque des revendications précédentes, **caractérisé en ce que** lorsque l'arrêt de production excède une durée limite, le procédé est arrêté et les lampes (22) de chauffages sont éteintes jusqu'à la reprise de la production.

## Patentansprüche

1. Verfahren zum Versetzen eines Ofens (12) zur thermischen Konditionierung von Vorformen (13) aus thermoplastischem Material in den Standby-Zustand bei einer vorübergehenden Produktionseinstellung, wobei der Ofen (12) aufweist:
- eine Vorrichtung (16) zum Transport von Vorformen (13), die das Durchlaufen der Vorformen (13) durch den Ofen (12) gewährleistet;
- mindestens eine Heizlampe (22), die eine Infrarotstrahlung emittieren kann, wenn sie aktiviert ist, wobei jede Heizlampe (22) entlang der Strecke der Vorformen (13) angeordnet ist;
- eine elektronische Steuereinheit der Heizlampen (22);
wobei das Verfahren einen ersten Ausschaltschritt (E1) aufweist, der ausgelöst wird, wenn eine Produktionseinstellung festgestellt wird, und während dessen die Heizlampen (22) ganz ausgeschaltet werden;
**dadurch gekennzeichnet, dass** der Ofen (12) mindestens ein Element (24, 26) zur Wärmespeicherung aufweist, das aus einem Material hergestellt ist, welches eine große Wärmekapazität aufweist, wobei das Speicherelement (24, 26) von der Heizlampe (22) erwärmt werden kann;
und dass das Verfahren einen zweiten folgenden Schritt (E2) der Aufrechterhaltung der Temperatur aufweist, um das Vorwärmen des Ofens (12) beim Neustart der Produktion zu vermeiden, und der am Ende des ersten Schritts (E1) ausgelöst wird und während dessen die Heizlampen (22) mit einer bestimmten Intensität aktiviert werden, um die Speicherelemente (24, 26) wieder zu erwärmen.

2. Verfahren nach dem vorhergehenden Anspruch, **dadurch gekennzeichnet, dass** das Verfahren ab dem ersten Schritt (E1) wiederholt wird, bis der Ofen (12) wieder in Betrieb genommen wird.

3. Verfahren nach einem der vorhergehenden Ansprüche, **dadurch gekennzeichnet, dass** der erste Schritt (E1) nach einer ersten vorbestimmten Ausschaltdauer (D1) endet.

4. Verfahren nach dem vorhergehenden Anspruch, **dadurch gekennzeichnet, dass** der zweite Schritt (E2) nach einer zweiten vorbestimmten Einschaltdauer (D2) endet.

5. Verfahren nach einem der Ansprüche 1 oder 2, **dadurch gekennzeichnet, dass** der erste Schritt (E1) endet, wenn die Temperatur des Speicherelements (24, 26) niedriger als eine oder gleich einer ersten unteren Schwellentemperatur (T1) ist.

6. Verfahren nach dem vorhergehenden Anspruch, **dadurch gekennzeichnet, dass** der zweite Schritt andauert, bis die Temperatur des Speicherelements (24, 26) höher als eine oder gleich einer zweiten oberen Schwellentemperatur (T2) ist.

7. Verfahren nach einem der Ansprüche 5 oder 6, **dadurch gekennzeichnet, dass** die Temperatur des Speicherelements (24, 26) von einer Sonde (28) gemessen wird, die in der Nähe des oder in dem Speicherelement (24, 26) angeordnet ist.

8. Verfahren nach einem der vorhergehenden Ansprüche, **dadurch gekennzeichnet, dass** der Ofen (12) Lüftungseinrichtungen aufweist, die von der elektronischen Steuereinheit gesteuert werden können, wobei die Lüftungseinrichtungen im ersten Schritt (E1) angehalten und im zweiten Schritt (E2) aktiviert werden.

9. Verfahren nach einem der vorhergehenden Ansprüche, **dadurch gekennzeichnet, dass**, wenn die Produktionseinstellung eine Grenzdauer überschreitet, das Verfahren angehalten wird und die Heizlampen (22) bis zur Wiederaufnahme der Produktion ausgeschaltet werden.

## Claims

1. A method for placing an oven (12) for heat-treating thermoplastic material preforms (13) on standby during a temporary cessation of production, the oven (12) including :
- a device (16) for conveying the preforms (13) that moves the preforms (13) through the oven (12) ;
- at least one heating lamp (22) that is adapted to emit infrared radiation when it isswitched on, each heating lamp (22) being disposed along the route of the performs (13) ;
- an electronic unit for controlling the heating lamps (22) ;
the method comprising a first or switching-off step (E1), which is triggered when a cessation of production is determined, and during which the heating lamps (22) are switched off completely;
**characterized in that** the oven (12) comprises at least one heat-storage element (24, 26) that is made from a material having a high thermal capacity, the storage element (24, 26) being adapted to be heated by the heating lamp (22) ;
and **in that** the method comprises a following second or temperature-maintaining step (E2), in order to prevent warming up the oven (12) during restarting of the production, and which is triggered after the first step (E1) and during which the heating lamps (22) are switched on at an intensity determined so as to heat the storage elements (24, 26).

2. The method claimed in the preceding claim, **characterized in that** the method is repeated from the first step (E1) until the oven (12) is returned to production.

3. The method claimed in either one of the preceding claims, **characterized in that** the first step (E1) ends after a predetermined first or switching-off duration (D1).

4. The method claimed in the preceding claim, **characterized in that** the second step (E2) ends after a predetermined second or switching-on duration (D2).

5. The method claimed in either one of claims 1 or 2, **characterized in that** the first step (E1) ends when the temperature of the storage element (24, 26) is less than or equal to a first or lower threshold temperature (T1).

6. The method claimed in the preceding claim, **characterized in that** the second step continues until the temperature of the storage element (24, 26) is greater than or equal to a second or upper threshold temperature (T2).

7. The method claimed in either one of claims 5 or 6, **characterized in that** the temperature of the storage element (24, 26) is measured by a probe (28) which is disposed near or in the storage element (24, 26).

8. The method claimed in any one of the preceding claims, **characterized in that** the oven (12) includes ventilation means that are adapted to be controlled by the electronic control unit, the ventilation means being deactivated during the first step (E1) and activated during the second step (E2).

9. The method claimed in any one of the preceding claims, **characterized in that** if the cessation of production exceeds a limit duration, the method is stopped and the heating lamps (22) are switched off until restarting of the production.
